# EUROPEAN PATENT SPECIFICATION

(11) **EP 2 737 788 B1**
(45) Date of publication and mention of the grant of the patent: **28.09.2016**
(21) Application number: 13171321.6
(22) Date of filing: 10.06.2013
(51) Int. Cl.: A01D 34/416, A01D 34/73

(54) **Head for a trimmer and attachment therefor**
Trimmerkopf und Zubehör dafür
Tête pour tondeuse et accessoire correspondant

(30) Priority: 03.12.2012 US 201213692029
(43) Date of publication of application: 04.06.2014
(73) Proprietor: Techtronic Outdoor Products Technology Limited, Hamilton HM12 (BM)
(72) Inventor: Sowell, Lee E., Pelzer, South Carolina 29669 (US); Patrick, Robert Andrew, Simpsonville, South Carolina 29681 (US)
(74) Representative: Stevenson-Hill, Jack Patrick

(56) References cited:
- EP-A1- 1 183 932
- US-A- 4 790 071
- US-A1- 2008 010 836

## Description

### FIELD

The present invention relates to landscape trimmers, and more particularly, to string heads or other heads for landscape trimmers.

### SUMMARY

Generally, landscape trimmers are used to cut grass and weeds, and are often used to edge around trees, near fences and walls, and along landscape borders. Conventional landscape trimmers include an elongated shaft with a rotating element or gear head near the end of the elongated shaft, and a spool or string head is attached to the gear head. Typically, the string head includes a monofilament line (i.e., trimmer line) that is rotated by the gear head for cutting and trimming along landscaped areas, fences, and walls.

EP1183932 relates to a cutting head for a string trimmer, according to the abstract of which the string trimmer comprises an elongate shaft, a cutting head rotatably mounted on one end of the elongate shaft. The head comprises a base, a cap, a spool rotatably mounted to the cap, and an autofeed mechanism mounted within the cap which interacts between the cap and the spool. The cap is releasably attachable to the base. The cap clips into the base. The cap comprises a first part, and the base comprises a second part wherein two resilient deformable arms having ribs formed on the end of the arms are mounted on one part and which engage with corresponding holes formed in the other part.

US4790071 relates to a line trimmer with replaceable cutting blade assembly, according to the abstract of which a flexible line trimmer for cutting vegetation can be converted to a blade cutting device. The trimmer has a motor driven rotatable head with a cavity defined by a wall of the head. The cavity receives a spool wrapped with line. The line has a free end extending through an aperture in the wall of the head. Drive lugs located in the cavity couple the spool to the drive head for rotation. The blade carrier replaces the spool and line. The blade carrier has a central portion that locates within the cavity while the spool is removed. The central portion has at least one drive member that is positioned to engage the drive lugs to rotate the blade carrier with the head. A plurality of blades are mounted to the periphery of the carrier. The carrier is fastened to the head.

In a first construction, the invention provides a trimmer head for use with a trimmer. The trimmer head includes a housing rotatable about an axis, the housing defining a cavity and a housing mating feature, and a spool receivable in the cavity for carrying a length of trimmer line. The trimmer head also includes a first cap member having a first mating feature operable to cooperate with the housing mating feature to selectively and releasably couple the first cap member with the housing. The first mating feature is formed as one piece with the first cap member. The first cap member cooperates with the housing to retain the spool in the cavity. The trimmer head also includes a second cap member having a second mating feature operable to cooperate with the housing mating feature to selectively and releasably couple the second cap member with the housing. The second mating feature is formed as one piece with the second cap member. The second cap member provides a cutting feature independent from the trimmer line. The first cap member and the second cap member are releasably and interchangeably coupleable to the housing without the use of tools.

In another construction, the invention provides a landscape trimmer having a motor, an output shaft driven by the motor, and a trimmer head according to the first construction. The trimmer head includes a housing rotatable about an axis, the housing defining a cavity and a housing mating feature, and a spool receivable in the cavity for carrying a length of trimmer line. The trimmer head also includes a first cap member having a first mating feature operable to cooperate with the housing mating feature to selectively and releasably couple the first cap member with the housing. The first mating feature is formed as one piece with the first cap member, and the first cap member cooperates with the housing to retain the spool in the cavity. The trimmer head also includes a second cap member having a second mating feature operable to cooperate with the housing mating feature to selectively and releasably couple the second cap member with the housing. The second mating feature is formed as one piece with the second cap member. The second cap member provides a cutting feature independent from the trimmer line. The first cap member and the second cap member are releasably and interchangeably coupleable to the housing without the use of tools.

In yet another construction, which does not form part of the claimed invention, there is provided a trimmer head for use with a trimmer. The trimmer head includes a housing rotatable about an axis, the housing including a circumferential wall defining a cavity and a housing mating feature associated with the circumferential wall. A spool is receivable in the cavity for carrying a length of trimmer line. The trimmer head also includes a first cap member and a second cap member. The first cap member has a first mating feature operable to cooperate with the circumferential wall and the housing mating feature to selectively and releasably couple the first cap member with the housing. The first mating feature is formed as one piece with the first cap member. The first cap member cooperates with the housing to retain the spool in the cavity. The second cap member has a second mating feature operable to cooperate with the circumferential wall and the housing mating feature to selectively and releasably couple the second cap member with the housing, the second mating feature being formed as one piece with the second cap member. The second cap member provides a cutting feature independent from the trimmer line. The first cap member and the second cap member are releasably and interchangeably coupleable to the housing without the use of tools.

Other aspects of the invention will become apparent by consideration of the detailed description and accompanying drawings.

### BRIEF DESCRIPTION OF THE DRAWINGS

- Fig. 1: is a perspective view of a landscape trimmer having a quick change head with blade cap member.
- Fig. 2: is a perspective view of the landscape trimmer shown in Fig. 1 illustrating an exploded view of the quick change head with blade cap member.
- Fig. 3: is a perspective view of a quick change head with spool and spool cap member.
- Fig. 4: is a front perspective view of the quick change head shown in Fig. 1.
- Fig. 5: is a front exploded view of the quick change head shown in Fig. 4.
- Fig. 6: is a rear exploded view of the quick change head shown in Fig. 5.
- Fig. 7: is a front exploded view of an alternative embodiment of a cap member with fixed line holders.

### DETAILED DESCRIPTION

Before any independent embodiments of the invention are explained in detail, it is to be understood that the invention is not limited in its application to the details of construction and the arrangement of components set forth in the following description or illustrated in the following drawings. The invention is capable of other independent embodiments and of being practiced or of being carried out in various ways. Also, it is to be understood that the phraseology and terminology used herein is for the purpose of description and should not be regarded as limiting.

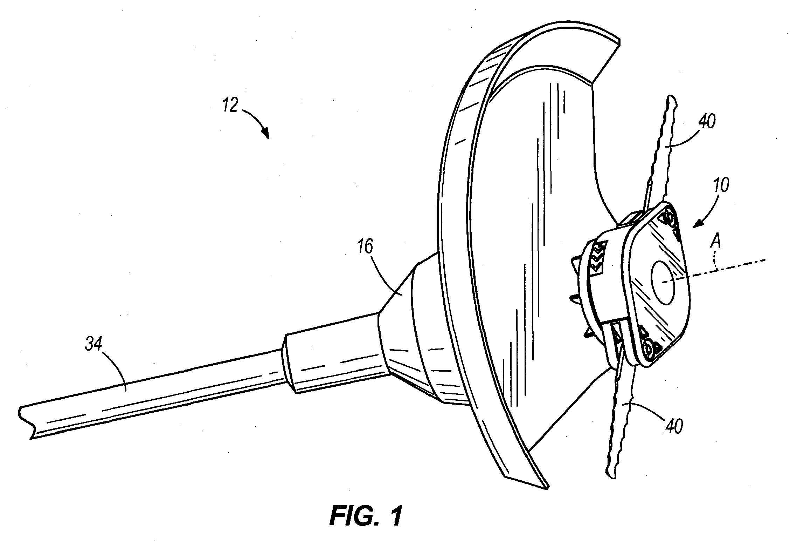

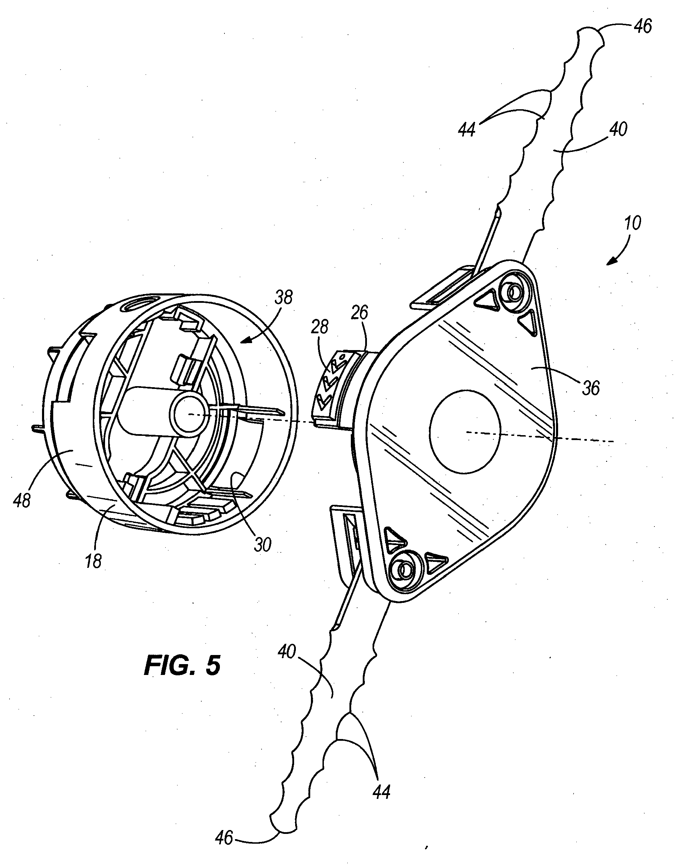

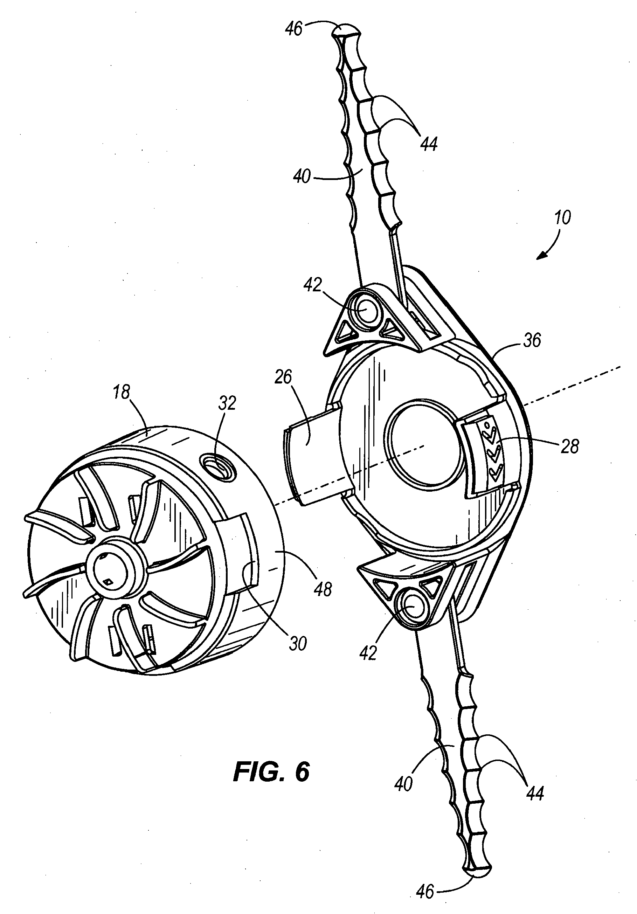

Figs. 1-6 illustrate a trimmer head 10 for use on a powered trimmer 12. In the illustrated construction, the trimmer 12 is a hand-held powered trimmer including an elongated shaft 34 for supporting a handle with a grip (not shown). In other constructions (not shown), the trimmer 12 may be a different type of powered trimmer and, for example, may include a frame and wheels for movement over the ground.

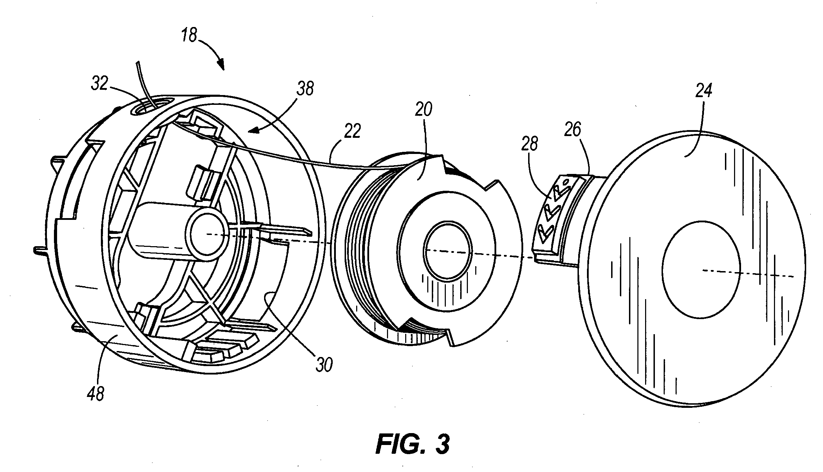

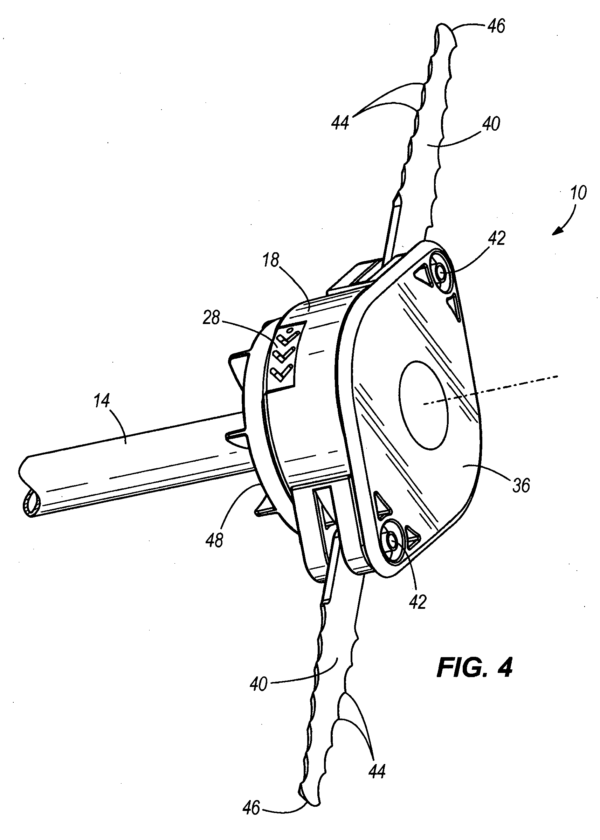

The trimmer 12 includes an output shaft 14 (Fig. 4) driven by a motor 16, such as a two-cycle gas engine, an electric motor, etc. As illustrated in Figs. 1-2, the trimmer head 10 defines a central axis A and includes a housing 18 couplable to and rotatable with the output shaft 14. The housing 18 includes a circumferential wall 48 defining a cavity 38 and receives a spool 20 (Fig. 3) in the spool cavity 38. A cutting line 22 is wound about the spool 20. The trimmer head 10 may employ a bump-feed type spool, an auto-feed type spool, a fixed line spool, etc. For example, the trimmer 12 may employ the feed device described in U.S. Patent Application No. 12/691,811, filed January 22, 2010, entitled, "STRING HEAD FOR A TRIMMER".

As illustrated in Fig. 3, the trimmer head 10 includes a first or spool cap member 24. The spool cap member 24 cooperates with the housing 18 to enclose and/or retain the spool 20 within the trimmer head 10. The housing 18 defines at least one line opening 32 through which the trimmer line 22 may pass. A portion of the trimmer line 22 positioned outside of the housing 18 may be used for cutting vegetation.

The spool cap member 24 includes a mating feature 26 for removably coupling the spool cap member 24 to a mating feature 30 of the housing 18. The housing mating feature 30 is associated with the circumferential wall 48 of the housing 18.

In the illustrated construction, the spool cap member 24 includes prongs 26 or snap-fits extending in an axial direction (parallel to axis A) for removably snap fitting with the housing 18, specifically with the circumferential wall 48 of the housing 18. In the illustrated construction, the mating feature 30 of the housing 18 includes circumferential openings 30 in the circumferential wall 48.

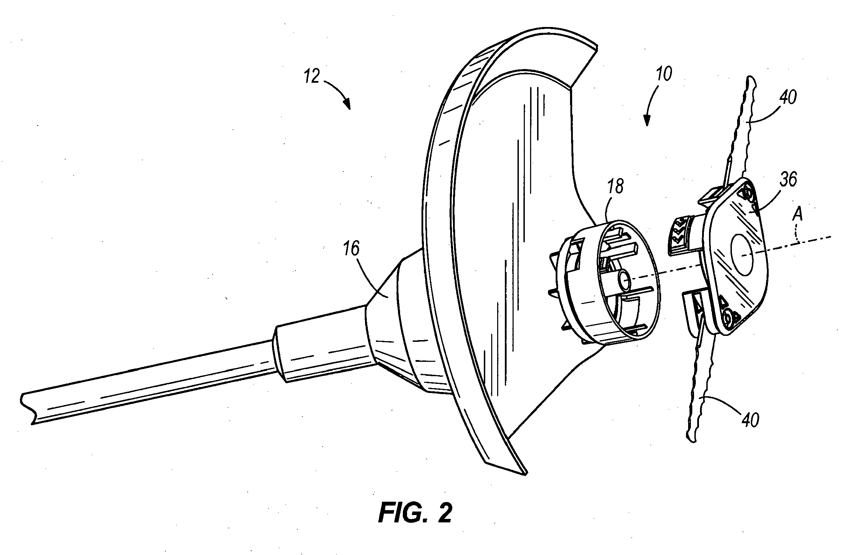

The prongs 26 include radial flanges 28 for mating with respective circumferential openings 30 in the circumferential wall 48. The flanges 28 are received in the respective openings 30 and are actuatable radially inwards towards the central axis A by a user from outside the housing 18 to remove the spool cap member 24 in the direction of the axis A (see Fig. 2). In the illustrated construction, the prongs 26, or mating features, are formed as one piece with the spool cap member 24. The circumferential openings 30, or mating features, are formed as one piece with the housing 18.

In other constructions (not shown), the mating features 26, 30 may include other types of snap-fit structures, configurations, shapes, etc. and may include only one or more than two prongs or snap-fit structures. Furthermore, in yet other constructions (not shown), the spool cap member 24 and housing 18 may be removably coupled by way of other types of other mating features, such as magnets, threads, connectors, fasteners, etc. Accordingly, the housing 18 may include other mating features corresponding to the structure of the mating features of the spool cap member 24.

Also, it should be understood that the mating features of the spool cap member 24 and the housing 18 may be reversed (e.g., the prongs 26 may be formed as one piece with the housing 18 (e.g., as a portion of the cylindrical wall 48), and the spool cap member 24 may include a circumferential wall having circumferential openings 30, etc.).

As illustrated in Figs. 1-2 and 4-6, the trimmer head 10 also includes a second or accessory cap member 36 for providing an alternative functional feature in place of or in addition to the line 22. The spool cap member 24 and the accessory cap member 36 are releasably and interchangeably coupleable to the housing 18 without the use of tools. The accessory cap member 36 may be coupled to the housing 18 with or without the spool 20 enclosed therein.

The accessory cap member 36 cooperates with the housing 18 to enclose the spool cavity 38 in the same way as the spool cap member 24 described above. That is, the accessory cap member 36 includes the same mating feature as the spool cap member 24 such that the spool cap member 24 and the accessory cap member 36 are interchangeable. In the illustrated construction, the accessory cap member 36 includes prongs 26 with radial flanges 28 for mating with respective circumferential openings 30 in the housing 18, as described above.

As also described above, in other constructions (not shown) the accessory cap member 36 and the housing 18 may employ other snap-fit structures, configurations, shapes, sizes and types of mating features, and the mating features may be reversed. In other constructions (not shown), the mating features of the spool cap member 24 and the accessory cap member 36 may be different from each other but still able to cooperate with the housing mating feature 30 to selectively couple each cap member 24, 36 to the housing 18.

In the illustrated construction, the accessory cap member 36 includes blades 40. The blades 40 extend radially from the accessory cap member 36 and are pivotably coupled to the accessory cap member 36. In the illustrated construction, the blades 40 are coupled by way of pins 42; however, other types of connections may be employed. The blades 40 are generally tapered as they extend radially away from the accessory cap member 36. The blades 40 include teeth 44 along both opposing longitudinal edges and a beveled cutting edge 46 at a distal end thereof.

In other constructions (not shown), other types of blades having other cutting features, shapes, toothforms, etc. may be employed. In other constructions (not shown), the accessory cap member 36 may include other accessories providing other functions to the trimmer head 10.

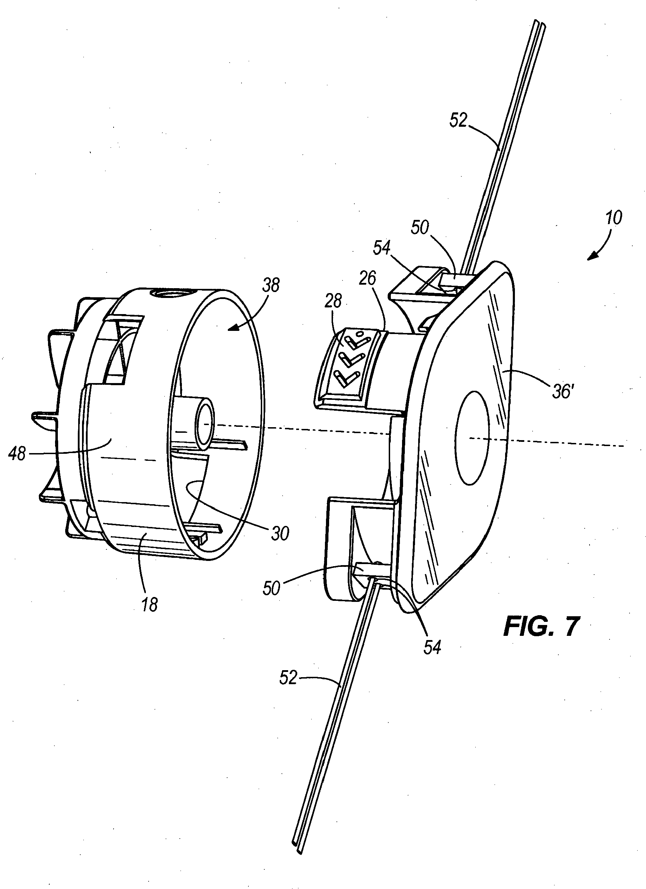

For example, Fig. 7 illustrates an accessory cap member 36' including a fixed line holder 50. In the illustrated construction, the accessory cap member 36' includes two fixed lines 52 held in place by two respective fixed line holders 50. However, in other constructions (not shown), the accessory cap member 36' may include only one or more than two fixed line holders 50. Preferably, to balance the trimmer head 10, the fixed lines 52 are spaced approximately equidistantly about the circumference of the cap member 36'. In the illustrated construction, the fixed lines 52 are spaced approximately 180 degrees apart, i.e., substantially opposite from one another.

Each line 52 is fixedly coupled to the fixed line holder 50 of the accessory cap member 36' by way of two substantially parallel through-holes 54 through which the line 52 is passed in succession at substantially the midpoint of the line 52.

In operation, a user may insert a spool 20 into the cavity 38 and attach a spool cap member 24 to the housing 18 and operate the trimmer 12 using the line 22 to cut vegetation. The user may remove the spool cap member 24 by pressing inwardly on the flanges 28 and pulling the spool cap member 24 out of engagement with the housing 18 in the axial direction. The user may replace the spool cap member 24 with the accessory cap member 36 with or without removing the spool 20 from the cavity 38. The user may then operate the trimmer 12 using the functionality of the accessory cap member 36. For example, the user may operate the trimmer 12 using blades 40 to cut vegetation.

Thus, the invention may provide, among other things, a quick-change trimmer head for a powered trimmer having various cap members providing different functional features and being interchangeable without the use of a tool. One or more independent features and independent advantages of the invention may be set forth in the following claims.

## Claims

1. A trimmer head (10) for use with a trimmer (12), the trimmer head (10) comprising:
a housing (18) rotatable about an axis (A), the housing (18) defining a cavity (38) for receiving a spool (20) carrying a length of trimmer line (22), the housing (18) further defining a housing mating feature (30);
a first cap member (24) having a first mating feature (26, 28) operable to cooperate with the housing mating feature (30) to selectively and releasably couple the first cap member (24) with the housing (18), the first mating feature (26, 28) being formed as one piece with the first cap member (24), the first cap member (24) cooperating with the housing (18) to retain the spool (20) in the cavity (38);
**characterized in that** the trimmer head (10) further includes a second cap member (36) having a second mating feature (26, 28) operable to cooperate with the housing mating feature (30) to selectively and releasably couple the second cap member (36) with the housing (18), the second mating feature (26, 28) being formed as one piece with the second cap member (36), the second cap member (36) providing a cutting feature (40, 52) independent from the trimmer line (22); and
wherein the first cap member (24) and the second cap member (36) are releasably and interchangeably coupleable to the housing (18) without the use of tools.

2. The trimmer head (10) of claim 1 wherein the second mating feature (26, 28) is substantially identical to the first mating feature (26, 28).

3. The trimmer head (10) of claim 1 or claim 2 wherein the cutting feature (40, 52) provided by the second cap member (36) includes at least one fixed string (52).

4. The trimmer head of claims 1 to 3 wherein the first mating feature (26, 28) and the second mating feature (26, 28) include snap-fits.

5. The trimmer head of any preceding claim wherein at least one of the first mating feature (26, 28) and the second mating feature (26, 28) includes a prong (26) and a flange (28) for snap-fitting to the housing (18).

6. The trimmer head of any preceding claim wherein the housing mating feature (30) includes an opening (30) in the housing for receiving the flange (28).

7. The trimmer head of any preceding claim, wherein the cutting feature (40, 52) provided by the second cap member (36) includes at least one blade (40).

8. The trimmer head of claim 7 wherein the at least one blade (40) is pivotably coupled to the second cap member (36) and extends radially therefrom.

9. The trimmer head of claim 7 or claim 8 wherein the at least one blade (40) includes cutting teeth (44) .

10. The trimmer head of claim 9 wherein the cutting teeth (44) are positioned along opposing longitudinal edges of the at least one blade (40).

11. The trimmer head of any one of claims 7 to 10 wherein the at least one blade (40) further includes a beveled cutting edge (46) disposed at a distal end thereof.

12. The trimmer head (10) of any preceding claim in combination with a landscape trimmer (12) comprising:
a motor (16);
an output shaft (14) driven by the motor.

## Patentansprüche

1. Trimmerkopf (10) zur Verwendung mit einem Trimmer (12), wobei der Trimmerkopf (10) Folgendes umfasst:
ein Gehäuse (18), das um eine Achse (A) rotierbar ist, wobei das Gehäuse (18) eine Vertiefung (38) zum Aufnehmen einer Spule (20) definiert, die eine Länge von Trimmschnur (22) trägt, wobei das Gehäuse (18) ferner ein Gehäuseeingriffsmerkmal (30) definiert;
ein erstes Abdeckelement (24), das ein erstes Eingriffsmerkmal (26, 28) aufweist, das betreibbar ist, um mit dem Gehäuseeingriffsmerkmal (30) zusammenzuwirken, um das erste Abdeckelement (24) selektiv und lösbar mit dem Gehäuse (18) zu koppeln, wobei das erste Eingriffsmerkmal (26, 28) einstückig mit dem ersten Abdeckelement (24) ausgebildet ist, wobei das erste Abdeckelement (24) mit dem Gehäuse (18) zusammenwirkt, um die Spule (20) in der Vertiefung (38) zu halten;
**dadurch gekennzeichnet, dass** der Trimmerkopf (10) ferner ein zweites Abdeckelement (36) einschließt, das ein zweites Eingriffsmerkmal (26, 28) aufweist, das betreibbar ist, um mit dem Gehäuseeingriffsmerkmal (30) zusammenzuwirken, um das zweite Abdeckelement (36) selektiv und lösbar mit dem Gehäuse (18) zu koppeln, wobei das zweite Eingriffsmerkmal (26, 28) einstückig mit dem zweiten Abdeckelement (36) ausgebildet ist, wobei das zweite Abdeckelement (36) ein Schneidemerkmal (40, 52) vorsieht, das von der Trimmschnur (22) unabhängig ist; und
wobei das erste Abdeckelement (24) und das zweite Abdeckelement (36) ohne Werkzeug lösbar und austauschbar an das Gehäuse (18) koppelbar sind.

2. Trimmerkopf (10) nach Anspruch 1, wobei das zweite Eingriffsmerkmal (26, 28) im Wesentlichen mit dem ersten Eingriffsmerkmal (26, 28) identisch ist.

3. Trimmerkopf (10) nach Anspruch 1 oder Anspruch 2, wobei das Schneidemerkmal (40, 52), das durch das zweite Abdeckelement (36) vorgesehen ist, zumindest einen festen Faden (52) einschließt.

4. Trimmerkopf nach Anspruch 1 bis 3, wobei das erste Eingriffsmerkmal (26, 28) und das zweite Eingriffsmerkmal (26, 28) Schnappverschlüsse einschließen.

5. Trimmerkopf nach einem der vorhergehenden Ansprüche, wobei zumindest eines von dem ersten Eingriffsmerkmal (26, 28) und dem zweiten Eingriffsmerkmal (26, 28) eine Klaue (26) und einen Flansch (28) zur Anbringung an dem Gehäuse (18) per Schnappverschluss einschließt.

6. Trimmerkopf nach einem der vorhergehenden Ansprüche, wobei das Gehäuseeingriffsmerkmal (30) eine Öffnung (30) in dem Gehäuse zur Aufnahme des Flansches (28) einschließt.

7. Trimmerkopf nach einem der vorhergehenden Ansprüche, wobei das Schneidemerkmal (40, 52), das durch das zweite Abdeckelement (36) vorgesehen ist, zumindest ein Schneideblatt (40) einschließt.

8. Trimmerkopf nach Anspruch 7, wobei das zumindest eine Schneideblatt (40) drehbar an das zweite Abdeckelement (36) gekoppelt ist und sich davon radial erstreckt.

9. Trimmerkopf nach Anspruch 7 oder Anspruch 8, wobei das zumindest eine Schneideblatt (40) Schneidezähne (44) einschließt.

10. Trimmerkopf nach Anspruch 9, wobei die Schneidezähne (44) entlang gegenüberliegenden Längskanten des zumindest einen Schneideblattes (40) angeordnet sind.

11. Trimmerkopf nach einem der Ansprüche 7 bis 10, wobei das zumindest eine Schneideblatt (40) ferner eine abgeschrägte Schneidekante (46) einschließt, die an einem distalen Ende davon angeordnet ist.

12. Trimmerkopf (10) nach einem der vorhergehenden Ansprüche in Kombination mit einem Landschaftstrimmer (12), umfassend:
einen Motor (16);
eine Antriebswelle (14), die von dem Motor angetrieben wird.

## Revendications

1. Tête de coupe-bordures (10) à utiliser avec une coupe-bordures (12), la tête de coupe-bordures (10) comprenant :
un logement (18) rotatif autour d'un axe (A), le logement (18) définissant une cavité (38) permettant de recevoir une bobine (20) porteuse d'une certaine longueur de fil pour coupe-bordures (22), le logement (18) définissant en outre une caractéristique d'appariement de logement (30) ;
un premier élément formant coiffe (24) présentant une première caractéristique d'appariement (26, 28) pouvant servir à coopérer avec la caractéristique d'appariement de logement (30) afin de coupler de manière sélective et libérable le premier élément formant coiffe (24) avec le logement (18), la première caractéristique d'appariement (26, 28) étant formée d'un seul tenant avec le premier élément formant coiffe (24), le premier élément formant coiffe (24) coopérant avec le logement (18) afin de retenir la bobine (20) dans la cavité (38) ;
**caractérisée en ce que** la tête de coupe-bordures (10) comprend en outre un deuxième élément formant coiffe (36) présentant une deuxième caractéristique d'appariement (26, 28) pouvant servir à coopérer avec la caractéristique d'appariement de logement (30) afin de coupler de manière sélective et libérable le deuxième élément formant coiffe (36) avec le logement (18), la deuxième caractéristique d'appariement (26, 28) étant formée d'un seul tenant avec le deuxième élément formant coiffe (36), le deuxième élément formant coiffe (36) fournissant une caractéristique de coupe (40, 52) indépendante du fil pour coupe-bordures (22) ; et
dans laquelle le premier élément formant coiffe (24) et le deuxième élément formant coiffe (36) peuvent être couplés de manière libérable et interchangeable avec le logement (18) sans utiliser d'outils.

2. Tête de coupe-bordures (10) selon la revendication 1, dans laquelle la deuxième caractéristique d'appariement (26, 28) est essentiellement identique à la première caractéristique d'appariement (26, 28).

3. Tête de coupe-bordures (10) selon la revendication 1 ou 2, dans laquelle la caractéristique de coupe (40, 52) fournie par le deuxième élément formant coiffe (36) comprend au moins un brin fixe (52).

4. Tête de coupe-bordures selon l'une quelconque des revendications 1 à 3, dans laquelle la première caractéristique d'appariement (26, 28) et la deuxième caractéristique d'appariement (26, 28) comprennent des fermetures par encliquetage.

5. Tête de coupe-bordures selon l'une quelconque des revendications précédentes, dans laquelle au moins une parmi la première caractéristique d'appariement (26, 28) et la deuxième caractéristique d'appariement (26, 28) comprend une broche (26) et une bride (28) permettant une fermeture par encliquetage sur le logement (18).

6. Tête de coupe-bordures selon l'une quelconque des revendications précédentes, dans laquelle la caractéristique d'appariement de logement (30) comprend une ouverture (30) dans le logement permettant de recevoir la bride (28).

7. Tête de coupe-bordures selon l'une quelconque des revendications précédentes, dans laquelle la caractéristique de coupe (40, 52) fournie par le deuxième élément formant coiffe (36) comprend au moins une lame (40).

8. Tête de coupe-bordures selon la revendication 7, dans laquelle la au moins une lame (40) est couplée pivotante au deuxième élément formant coiffe (36) et s'étend de manière radiale à partir de celle-ci.

9. Tête de coupe-bordures selon la revendication 7 ou 8, dans laquelle la au moins une lame (40) comprend des dents de coupe (44).

10. Tête de coupe-bordures selon la revendication 9, dans laquelle les dents de coupe (44) sont positionnées le long de bords longitudinaux opposés de la au moins une lame (40).

11. Tête de coupe-bordures selon l'une quelconque des revendications 7 à 10, dans laquelle la au moins une lame (40) comprend en outre un bord de coupe biseauté (46) agencé au niveau d'une extrémité distale de celle-ci.

12. Tête de coupe-bordures (10) selon l'une quelconque des revendications précédentes, en combinaison avec une débroussailleuse (12), comprenant :
un moteur (16);
un arbre de sortie (14) entrainé par ledit moteur.
